(19) Europäisches Patentamt / European Patent Office / Office européen des brevets

(11) **EP 2 379 991 B1**

(12) **EUROPÄISCHE PATENTSCHRIFT**

(45) Veröffentlichungstag und Bekanntmachung des Hinweises auf die Patenterteilung:
**17.03.2021 Patentblatt 2021/11**

(21) Anmeldenummer: **09810746.9**

(22) Anmeldetag: **21.12.2009**

(51) Int Cl.:
*G01F 1/58* (2006.01)   *G01P 5/00* (2006.01)

(86) Internationale Anmeldenummer:
**PCT/DE2009/050077**

(87) Internationale Veröffentlichungsnummer:
**WO 2010/069306 (24.06.2010 Gazette 2010/25)**

(54) **VERFAHREN ZUR KONTAKTLOSEN BESTIMMUNG VON GESCHWINDIGKEITSVERTEILUNGEN EINES FLÜSSIGEN METALLS IN EINER STRANGGIESSKOKILLE**

METHOD FOR THE NON-CONTACT DETERMINATION OF VELOCITY DISTRIBUTIONS OF A LIQUID METAL IN A CONTINUOUS CASTING DIE

PROCÉDÉ DESTINÉ À LA DÉTERMINATION SANS CONTACT DE RÉPARTITIONS DE VITESSE D'UN MÉTAL LIQUIDE DANS UNE LINGOTIÈRE DE COULÉE CONTINUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.12.2008 DE 102008055034**

(43) Veröffentlichungstag der Anmeldung:
**26.10.2011 Patentblatt 2011/43**

(73) Patentinhaber: **Helmholtz-Zentrum Dresden - Rossendorf e.V.**
**01328 Dresden (DE)**

(72) Erfinder:
• STEFANI, Frank
  01099 Dresden (DE)
• WONDRAK, Thomas
  01324 Dresden (DE)
• GUNDRUM, Thomas
  01454 Ullersdorf (DE)
• TIMMEL, Klaus
  01665 Klipphausen (DE)
• GERBETH, Gunter
  01328 Dresden (DE)

(56) Entgegenhaltungen:
EP-A1- 1 285 277     FR-A1- 2 620 360
FR-A1- 2 794 042     JP-A- 54 063 861
JP-A- 2008 057 990

• STEFANI F ET AL: "Contactless inductive flow tomography" PHYSICAL REVIEW E (STATISTICAL, NONLINEAR, AND SOFT MATTER PHYSICS) APS THROUGH AIP USA, Bd. 70, Nr. 5, November 2004 (2004-11), Seiten 56306-1, XP002591786 ISSN: 1063-651X in der Anmeldung erwähnt
• STEFANI F ET AL: "VELOCITY RECONSTRUCTION IN CONDUCTING FLUIDS FROM MAGNETIC FIELD AND ELECTRIC POTENTIAL MEASUREMENTS" INVERSE PROBLEMS, INSTITUTE OF PHYSICS PUBLISHING, BRISTOL, GB LNKD-DOI:10.1088/0266-5611/15/3/309, Bd. 15, Nr. 3, 1. Juni 1999 (1999-06-01), Seiten 771-786, XP001030133 ISSN: 0266-5611

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur kontaktlosen Bestimmung von Geschwindigkeitsverteilungen eines flüssigen Metalls in einer Stranggießkokille beim Brammengießen. Ein bevorzugtes Einsatzgebiet ist die Geschwindigkeitsbestimmung im Strangguss von Stahl und Aluminium beim Brammengießen.

Beim kontinuierlichen Stranggießen, insbesondere von Stahl, sind ein gleichmäßiger Gießprozess und ein möglichst konstanter Badspiegel in der Kokille von großer Bedeutung für die Qualität des Endprodukts. Fluktuationen des Badspiegels verhindern die Ausbildung einer homogenen Schlackeschicht und können damit Inhomogenitäten in der Schmierung und beim Wärmeübergang zwischen erstarrter Schale und Kokille hervorrufen, was zu Anbackungen des Stahls an die Kokille oder Brüchen des Stranges führen kann. Des Weiteren können zu hohe Geschwindigkeiten in der Nähe des Badspiegels zum Mitreißen des Gießpulvers in den Strang führen.

Unerwünschte Oszillationen des Badspiegels treten insbesondere beim Brammengießen auf. Als Gründe hierfür werden selbsterregte Oszillationen der beiden aus dem Tauchrohr in die Kokille austretenden Strahlen, das so genannte Strangpumpen durch die Rollenteilung in der Strangführung sowie der Einfluss des eingeperlten Argons diskutiert. Ungeachtet dieser Diskussion ist es in jedem Fall wünschenswert, genaue Kenntnis über den Strömungszustand in der Kokille zu haben, um gegebenenfalls, z.B. durch externe Magnetfelder, unerwünschte Fluktuationen des Strömungsmusters und des Badspiegels zu vermeiden oder zu dämpfen. Dabei liegt der Schwerpunkt eindeutig auf der Bestimmung derjenigen Geschwindigkeitskomponenten, die parallel zur Breitseite der Kokille gerichtet sind. Diese Komponenten sind auf Grund der Richtung der Strahlströmungen aus dem Tauchrohr dominant und bestimmen die Dynamik des Badspiegels. Von besonderer Wichtigkeit ist dabei eine verlässliche Identifikation der großskaligen Strömungsmuster, insbesondere die Unterscheidung von Einzel-und Doppelwirbelstrukturen.

Zur Bestimmung von Strömungsgeschwindigkeiten in der Kokille sind bereits einige Verfahren vorgeschlagen worden.

Eine Methode zur Bestimmung des Strömungsmusters in der Kokille, basierend auf der Analyse von an verschiedenen Stellen der Kokille gemessenen Temperaturverteilungen, wurde in WO 00/51763 A vorgeschlagen. Nachteilig an dieser Methode ist die relativ große Trägheit, mit der das Temperatursignal einer Geschwindigkeitsänderung folgt, wodurch eine schnelle Reaktion erschwert wird. Des Weiteren erfordert das Verfahren durch den nötigen Einbau von Temperatursensoren einen direkten Eingriff in die Kokille, gestattet also keine kontaktlose Bestimmung der Strömungsgeschwindigkeit.

In WO 00/58695 A wurde ein Verfahren zur Bestimmung verschiedener Parameter einer Metallschicht, inklusive lokaler Strömungsgeschwindigkeiten, vorgeschlagen, welches auf der Messung von Kräften basiert, die durch die strömungsinduzierten Wirbelströme unter dem Einfluss eines extern angelegten Magnetfeldes entstehen. Ein Nachteil dieses Verfahrens ist es, dass es zwar lokale Strömungsgeschwindigkeiten in der unmittelbaren Nachbarschaft des Sensors aber kein Gesamtbild der Strömung liefert.

Es wurde in DE 43 16 344 A1 eine kontaktlose Strömungsmesseinrichtung beschrieben, die darauf beruht, dass in der Nähe einer Magnetfeld erzeugenden Komponente durch Turbulenzelemente der Flüssigkeit ein zusätzliches magnetisches Signal entsteht. Durch Aufnahme dieses Signals an verschiedenen Messpunkten und zeitliche Korrelierung kann auf Laufzeitunterschiede und somit auf die Flüssigkeitsgeschwindigkeit zwischen den verschiedenen Messpunkten geschlossen werden. Dabei muss aber vorausgesetzt werden, dass ein gegebenes Turbulenzelement nacheinander an zwei Messpunkten vorbeifließt, was bedingt, dass schon im vorhinein die Strömungsstruktur in groben Zügen bekannt sein muss. Ein weiteres Problem dieses Verfahrens tritt dann auf, wenn die Flüssigkeit von einer hochleitfähigen Wand umgeben ist, die auf Grund des Skineffektes zu einer starken Dämpfung der hochfrequenten turbulenzinduzierten Signale führt. Genau dieses Problem tritt beim Strangguss von Stahl in Kupferkokillen auf.

In EP 1 192 019 B1 wurde ein Verfahren zum Messen der Strömungsgeschwindigkeit eines flüssigen Metalls in einer Kokille, die mit einer elektromagnetischen Gleitfeldbremse ausgestattet ist, vorgeschlagen. Dies erfolgt durch Messung von Strom und Spannung der Energiequellen der einzelnen Induktoren der Gleitfeldbremse und Rückschluss auf die Strömung im Inneren der Kokille. Definitionsgemäß ist dieses Verfahren auf Stranggussanlagen mit Gleitfeldbremsen beschränkt.

Von den Erfindern wurde in EP 1 285 277 A1 und EP 1 285 277 B1 ein Verfahren und eine Anordnung zur kontaktlosen Bestimmung von räumlichen Geschwindigkeitsverteilungen in elektrisch leitfähigen Flüssigkeiten vorgeschlagen, die wesentlich auf Messungen der geschwindigkeitsinduzierten Magnetfelder an mehreren, das Flüssigkeitsvolumen möglichst gleichmäßig umschließenden Magnetfeldsensoren beruht. Eine Grundvoraussetzung für die Rekonstruktion aller Geschwindigkeitskomponenten war, dass das notwendige externe Magnetfeld nacheinander in zwei verschiedene, günstiger Weise orthogonale Richtungen angelegt wird. Beispielsweise kann die Poloidalkomponente des Geschwindigkeitsfeldes in einem Zylinder unter dem Einfluss eines rein vertikal angelegten Magnetfeldes aus den zugehörigen extern gemessenen induzierten Magnetfeldern bestimmt werden, während die Toroidalkomponente unter dieser Bedingung komplett unbestimmt bliebe. Für deren Bestimmung muss zusätzlich das externe Feld in eine andere, günstiger Weise in horizontale Richtung angelegt werden. Die experimentelle Verifikation einer solchen kontaktlosen induktiven Strömungstomographie war von STEFANI, Frank et al. in "Contactless inductive flow tomography." (Physical Review E70, 2004, S. 056306) dokumentiert worden. Ein Nachteil dieses Verfahrens ist der relativ hohe technische Aufwand, der sich aus der Notwendigkeit des Anlegens von mindestens zwei sich in ihrer Richtung unterscheidender Magnetfelder ergibt.

Der Erfindung liegt die Aufgabe zugrunde, eine möglichst einfache kontaktlose induktive Messung der Geschwindigkeitsverteilung einer Flüssigmetallströmung in einer Stranggießkokille beim Brammengießen vorzunehmen.

Beim Brammen-Strangguss ist das Verhältnis von Dicke zu Breite der Kokille klein. Dies ermöglicht es, das Geschwindigkeitsfeld in der Kokille in guter Näherung als zweidimensional (mit vernachlässigbarer Geschwindigkeitskomponente in Richtung parallel zur Schmalseite der Kokille) anzunehmen, wodurch sich die Möglichkeit ergibt, diese vereinfachte Strömungsstruktur nur unter Anlegung eines einzigen primären Magnetfeldes zu bestimmen. Dies stellt gegenüber dem in EP 1 285 277 B1 vorgestellten Verfahren unter Benutzung mindestens zweier angelegter Magnetfelder eine signifikante Neuerung und Vereinfachung dar, die mit einer wesentlichen Reduzierung des Messaufwandes einhergeht.

Erfindungsgemäß wird die Aufgabe mit den Merkmalen des Patentanspruchs 1 gelöst, Ausführungsformen der Erfindung ergeben sich aus den Ansprüchen 2 bis 6.

Die Erfindung zur Bestimmung von Geschwindigkeitsfeldern $\mathbf{v}$ flüssiger Metalle der Leitfähigkeit s in Stranggießkokillen geht von der Tatsache aus, dass durch Anlegen eines äußeren Magnetfeldes $\mathbf{b}_0$ (Primärfeld) eine elektrische Stromdichte $\mathbf{j}$

$$\mathbf{j} = s\,(\mathbf{v} \times \mathbf{b}_0 - \mathrm{grad}\ w) \tag{1}$$

induziert wird. Diese strömungsinduzierte Stromdichte erzeugt gemäß dem Biot-Savartschen Gesetz (siehe Formel (2), STEFANI, Frank et al. in "Contactless inductive flow tomography.", Physical Review E70, 2004, S. 056306-1.) ein zusätzliches Magnetfeld $\mathbf{b}$, welches auch außerhalb der Flüssigkeit gemessen werden kann und zur kontaktlosen Geschwindigkeitsrekonstruktion herangezogen wird. Zunächst muss allerdings die Abhängigkeit des elektrischen Potentials w vom Geschwindigkeitsfeld $\mathbf{v}$ bestimmt werden. Aus der Divergenzbildung von Gleichung (1) und der Bedingung div $\mathbf{j}$ = 0 ergibt sich zunächst die Poissongleichung für das elektrische Potential:

$$\mathrm{div}\ \mathrm{grad}\ w = \mathrm{div}\ (\mathbf{v} \times \mathbf{b}_0)\ . \tag{2}$$

Setzt man eine geeignete Diskretisierung von Oberflächen- und Volumenintegralen voraus und interpretiert man im folgenden $\mathbf{W}$ als Vektor, der alle elektrischen Potentiale an den NW Stützstellen des Oberflächenintegrals enthält, sowie $\mathbf{V}$ als Vektor, der alle Geschwindigkeitskomponenten von $\mathbf{v}$ an den NV Stützstellen des Volumenintegrals enthält, so kann die Lösung der Poissongleichung gemäß der zweiten Greenschen Identität in der Form

$$\mathbf{W} = \mathbf{C}\ \mathbf{W} + \mathbf{N}\ \mathbf{V} \tag{3}$$

geschrieben werden. Die genaue Form der Matrix $\mathbf{C}$, welche nur von der Geometrie der eingeschlossenen Flüssigkeit abhängt, sowie der Matrix $\mathbf{N}$, welche auch vom angelegten Primärfeld $\mathbf{b}_0$ abhängt, kann unmittelbar aus der Formel 3 in STEFANI, Frank et al. "Contactless inductive flow tomography." (Physical Review E70, 2004, S. 056306-1) abgeleitet werden. Zur Lösung der singulären Gleichungen für $\mathbf{W}$ wird das aus der Magnetoenzephalographie bekannte Deflationsverfahren eingesetzt [siehe HÄMÄLÄINEN, M. et al. in "Magnetoencephalography - Theory, instrumentation, and application studies ofthe working human brain.", Rev. Mod. Phys. 65, 1993, S. 414-497 (speziell: S.429-430)]. Im Ergebnis ergibt sich für die elektrischen Potentiale am Rand:

$$\mathbf{W} = (\mathbf{I} - \mathbf{C})^{-1}\ \mathbf{N}\ \mathbf{V}\ , \tag{4}$$

wobei die Matrix I die Einheitsmatrix vom Typ (NW,NW) ist und die Matrix $(\mathbf{I} - \mathbf{C})^{-1}$ als die invertierte Matrix von $(\mathbf{I} - \mathbf{C})$ im Sinne des Deflationsverfahrens zu verstehen ist.

Interpretiert man nun $\mathbf{B}$ als Vektor, der alle an den NB externen Messstellen bestimmten induzierten Magnetfelder $\mathbf{b}$ umfasst, so liefert die Anwendung des Biot-Savartschen Gesetzes auf Gleichung (1) unter Zuhilfenahme von Gleichung (4) eine lineare Beziehung zwischen dem Vektor $\mathbf{V}$ der gesuchten Geschwindigkeitskomponenten und dem Vektor $\mathbf{B}$ der gemessenen induzierten Magnetfelder in der Form

$$B = M\,V + P\,(I - C)^{-1}\,N\,V \;, \tag{5}$$

wobei sich die genaue Form der Matrix M vom Typ (NB,NV) und die der Matrix $P$ vom Typ (NB,NW) aus Formel (2) in STEFANI, Frank et al. in "Contactless inductive flow tomography." (Physical Review E70, 2004, S. 056306-1) ergibt. Im Verfahren muss die Matrix $P\,(I - C)^{-1}\,N$ für eine gegebene Geometrie der eingeschlossenen Flüssigkeit nur einmal bestimmt werden. Dies ist aus verfahrenstechnischer Sicht wichtig, da diese Matrix nur noch vom Typ (NB,NV) und somit relativ klein ist. Die Effekte der elektrischen Potentiale an der üblicherweise großen Anzahl NW von Stützstellen des Oberflächenintegrals sind in der relativ kleinen Matrix $P\,(I - C)^{-1}\,N$ in summarischer Weise enthalten.

Mit Gleichung (5) ist somit ein lineares Gleichungssystem zur Bestimmung des Vektors $V$ der gesuchten Geschwindigkeitskomponenten aus dem Vektor $B$ der gemessenen induzierten Magnetfelder entstanden, welches im Sinne der Methode der kleinsten Quadrate mit einem Standardverfahren zur Lösung linearer Gleichungssysteme gelöst werden kann. Dabei wird als zu minimierendes Funktional die mittlere quadratische Abweichung der durch die angenommene Geschwindigkeit induzierten Magnetfelder von den gemessenen Werten benutzt.

Allerdings erweist sich dieses Gleichungssystem als schlecht konditioniert und muss deshalb in einem zweiten Verfahrensschritt regularisiert werden. Im Fall der vorliegenden Erfindung bietet sich als Ausführungsform des Regularisierungsverfahrens die so genannte Tichonov-Regularisierung an, in welcher zum Funktional der mittleren quadratischen Restabweichung für die gemessenen induzierten Magnetfelder ein Funktional addiert wird, welches dafür sorgt, dass eine geeignete Norm der gesuchten Geschwindigkeit mitminimiert wird. Die Methode der Tichonov-Regularisierung und die noch im Weiteren zu besprechende Methode der L-Kurve wurden z.B. beschrieben von HANSEN, P. C. in "Analysis of discrete ill-posed problems by means of the L-curve." (SIA-Review, 1992 Band 34, Nr. 4, S. 561-580). Für den Zweck des erfindungsgemäßen Verfahrens erweisen sich als Regularisierungsfunktional sowohl das Funktional des mittleren quadratischen Geschwindigkeitsbetrags als auch das Funktional der mittleren quadratischen Krümmung der Geschwindigkeit als geeignet. Die zweite Variante ist aus physikalischer Sicht vorzuziehen, da das Geschwindigkeitsfeld in vielen hydrodynamischen Anwendungen als relativ glatt angenommen werden kann. Darüber hinaus wird zur Absicherung der Divergenzfreiheit des gesuchten Geschwindigkeitsfeldes ein Funktional der mittleren quadrierten Geschwindigkeitsdivergenz hinzugefügt. Mit Hilfe eines weiteren Funktionals kann die Abhängigkeit der zweidimensionalisierten Geschwindigkeit von der Koordinate parallel zur Schmalseite der Kokille festgelegt werden.

Die Erfindung wird nachstehend an einem nicht einschränkenden Ausführungsbeispiel für das Verfahren näher beschrieben.

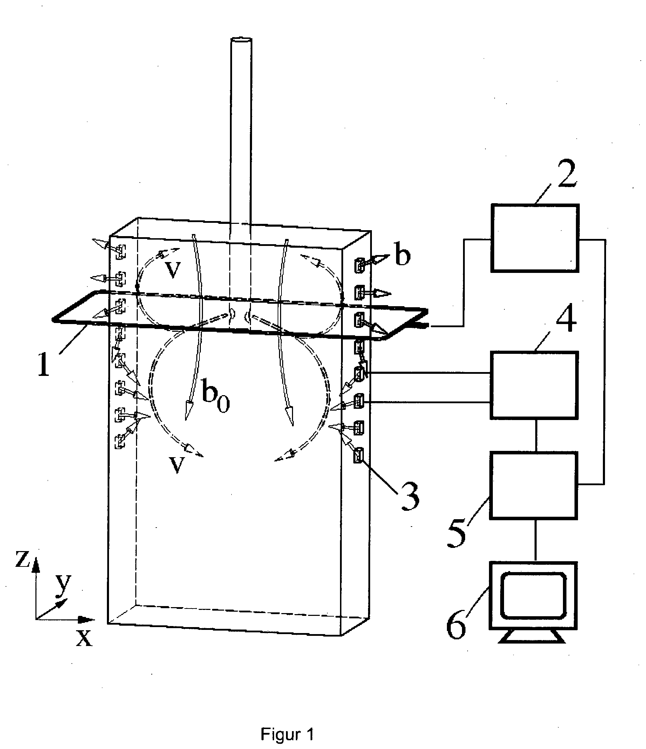

Abbildung 1 zeigt eine Prinzipdarstellung einer Anordnung zur Durchführung des erfindungsgemäßen Verfahrens. Zu dieser Anordnung gehört eine Spule (1), die in der Stranggießkokille ein Magnetfeld erzeugt, welches im Wesentlichen vertikal gerichtet ist, eine Mess- und Steuereinheit (2) für den in dieser Spule fließenden Strom, eine Mehrzahl von Magnetfeldsensoren (3) außerhalb der Kokille, die mit einem Signalprozessor (4) zur Aufnahme der Messwerte verbunden sind, eine diesem Signalprozessor nachgeschaltete Auswerte- und Speichereinheit (5) und ein finales Ausgabegerät (6). Es empfiehlt sich, die Mess- und Steuereinheiten (2) mit der Auswerte- und Speichereinheit (5) zu verbinden, um in dieser eine Kompensation des möglicherweise zeitlich schwankenden primären Magnetfeldes vorzunehmen. Aus Gründen der Übersichtlichkeit der Darstellung werden in der Zeichnung nur die Verbindungen von zwei Magnetfeldsensoren (3) zum Signalprozessor explizit dargestellt.

Die Stärke $b_0$ des primären Magnetfeldes $b_0$ ist an den technischen Parametern des konkreten Stranggussverfahrens sowie an den verwendeten Magnetfeldsensoren auszurichten. Soll die von Einflüssen durch Magnetfelder möglichst ungestörte Geschwindigkeitsverteilung in der Kokille bestimmt werden, so ist die Stärke des Magnetfeldes so zu wählen, dass sowohl der dimensionslose Wechselwirkungsparameter $N = s\,b_0^2\,L/(dV)$ als auch die dimensionslose Hartmannzahl $Ha = b_0 L\,(s/(dn))^{1/2}$ viel kleiner als 1 sind (dabei ist s die elektrische Leitfähigkeit der Flüssigkeit, d die Dichte der Flüssigkeit, n die kinematische Viskosität der Flüssigkeit, L eine typische Längenausdehnung der Kokille und V eine typische Geschwindigkeit der Flüssigkeit). Sollten zur Beeinflussung der Kokillenströmung bereits externe Magnetfelder beim Gussprozess verwendet werden, können diese gegebenenfalls für den Messprozess benutzt werden. Typischerweise werden zur Magnetfeldmessung solche Sensoren Verwendung finden, die in der Lage sind, auf dem Hintergrund des dominanten Primärfeldes die um mehrere Größenordnungen kleineren induzierten Magnetfelder verlässlich zu bestimmen.

In der Ausführungsform wird das Magnetfeld durch eine Spule erzeugt, die etwa in Höhe der unteren Öffnungen des Tauchrohrs angebracht ist und ein im Wesentlichen vertikales Magnetfeld erzeugt. Ein solches vertikal angelegtes Magnetfeld hat den Vorteil, dass die durch die Oszillationen der Kupferkokille induzierten Ströme und Magnetfelder klein sind, da die Oszillationsbewegung und die Magnetfeldrichtung weitgehend parallel sind.

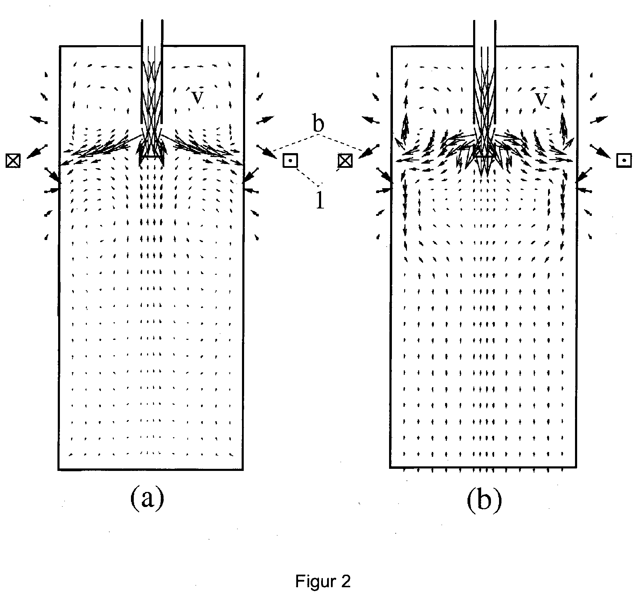

In der Anordnung werden die Magnetfeldsensoren nur entlang der Schmalseite der Kokille angeordnet. Demgemäß werden in der Ausführungsform des Verfahrens nur gemessene induzierte Magnetfelder entlang dieser Schmalseite der Kokille zur Geschwindigkeitsbestimmung herangezogen. In Abbildung 2a wird eine für den Strangguss typische, numerisch bestimmte Strömungsstruktur gezeigt, die unter dem Einfluss eines primären Magnetfeldes die angezeigten Magnetfelder an zwei mal acht Positionen an den kürzeren Seiten der Kokille induziert.

Die aus diesen Magnetfeldern durch das erfindungsgemäße Verfahren ermittelte Strömungsstruktur in der Kokille ist in Abbildung 2b angegeben. Man erkennt eine gute Übereinstimmung mit der in Abbildung 2a angegebenen ursprünglichen Strömungsstruktur. Diese Übereinstimmung kann durch eine größere Anzahl von Magnetfeldsensoren verbessert werden.

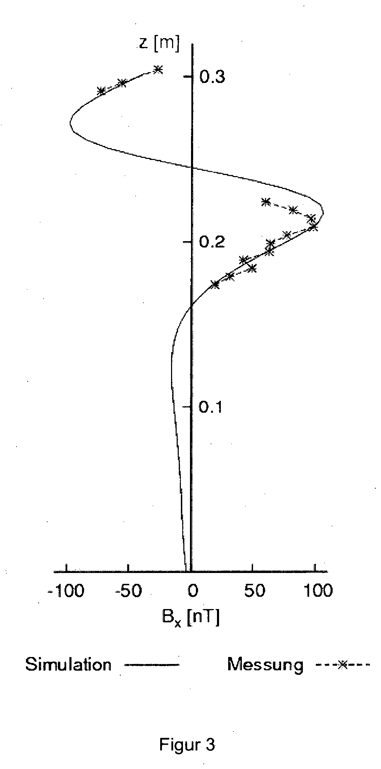

Abb. 3 dokumentiert die entlang der Schmalseite der Kokille induzierten Magnetfelder in einem Modell des Stranggusses unter Verwendung der eutektischen Legierung GaInSn. Die Längenausdehnung des Modells in x-y-z-Richtung ist 140 x 35 x 300 mm$^3$, der Innendurchmesser des verwendeten Tauchrohres ist 10 mm. Die durchgezogene Linie stellt die berechneten Normalkomponenten des induzierten Magnetfeldes unter Verwendung des numerisch berechneten Geschwindigkeitsfeldes (vgl. Abbildung 2a) dar. Die Sterne repräsentieren die mit einem Fluxgate-Sensor gemessenen Magnetfelder an einer Auswahl von Positionen. Bei einer Stärke des angelegten Magnetfeldes von 1 mT liegen die induzierten Magnetfelder in der Größenordnung von 100 nT und kleiner. Deutlich zu sehen ist der Nulldurchgang des induzierten Feldes etwa an der vertikalen Position, an der der Strahl aus dem Tauchrohr auf die Kokillenwand trifft. Im Wesentlichen stimmen die gemessenen Werte gut mit der numerisch bestimmten Kurve überein. Ein wesentlicher Grund der leichten Abweichungen dürfte in der Differenz zwischen tatsächlicher Geschwindigkeitsstruktur und der numerisch bestimmten Geschwindigkeitsstruktur zu suchen sein.

Es kann vorgesehen sein, dass aus den an der Schmalseite der Kokille gemessenen Magnetfeldern nur die Positionen des Auftreffens der Strahlen aus dem Tauchrohr auf die Schmalseite der Kokille bestimmt werden.

## Patentansprüche

1. Verfahren zur kontaktlosen Bestimmung der Geschwindigkeitsverteilung der Flüssigkeitsströmung (v) eines flüssigen Metalls in einer Stranggießkokille beim Brammengießen, wobei

   - die Stranggießkokille eine Breitseite und eine Schmalseite aufweist,
   - ein einziges, entlang der vertikalen Richtung verlaufendes primäres Magnetfeld ($b_0$) in der Flüssigkeitsströmung in der Stranggießkokille erzeugt wird,
   - die durch die Wechselwirkung der Flüssigkeitsströmung mit dem primären Magnetfeld ($b_0$) induzierten Magnetfelder (b) an einer Mehrzahl von Erfassungsstellen außerhalb der Flüssigkeitsströmung gemessen werden, wobei die induzierten Magnetfelder nur an der Schmalseite der Stranggießkokille gemessen werden, und
   - aus den gemessenen induzierten Magnetfeldern (b) die beiden parallel zur Breitseite der Stranggießkokille gerichteten Geschwindigkeitskomponenten der Flüssigkeitsströmung (v) bestimmt werden.

2. Verfahren nach Anspruch 1, **dadurch gekennzeichnet, dass** die Bestimmung der Geschwindigkeit unter Verwendung des Prinzips der kleinsten Quadrate erfolgt, wobei als zu minimierendes Funktional die mittlere quadratische Abweichung der für das primäre Magnetfeld ($b_0$) durch die angenommene Geschwindigkeit induzierten Magnetfelder (b) von den jeweils gemessenen Werten benutzt wird.

3. Verfahren nach Anspruch 1 oder 2, **dadurch gekennzeichnet, dass** die Divergenzfreiheit des Geschwindigkeitsfeldes durch Minimierung des Funktionals der mittleren quadratischen Divergenz des Geschwindigkeitsfeldes als zusätzliche Information verwendet wird.

4. Verfahren nach einem der Ansprüche 1 bis 3, **dadurch gekennzeichnet, dass** zur Vermeidung unphysikalisch großer Geschwindigkeitsbeträge die Tichonov-Regularisierung verwendet wird.

5. Verfahren nach Anspruch 4, **dadurch gekennzeichnet, dass** für die Tichonov-Regularisierung die mittlere quadratische Geschwindigkeit oder die mittlere quadratische Krümmung des Geschwindigkeitsfeldes als Regularisierungsfunktional verwendet wird.

6. Verfahren nach einem der Ansprüche 1 bis 5, **dadurch gekennzeichnet, dass** das primäre Magnetfeld ($b_0$) mittels einer einzigen Spule (1) erzeugt wird.

## Claims

1. Method for the contactless determination of the velocity distribution of the liquid flow (v) of a liquid metal in a continuous casting die during slab casting, wherein

- the continuous casting die has a wide side and a narrow side,
- a single primary magnetic field (bo), running along the vertical direction, is generated in the liquid flow in the continuous casting die,
- the magnetic fields (b) induced by the interaction of the liquid flow with the primary magnetic field (bo) are measured at a plurality of recording points outside the liquid flow, wherein the induced magnetic fields are only measured on the narrow side of the continuous casting die, and
- the measured induced magnetic fields (b) are used to determine the two velocity components of the liquid flow (v) directed parallel to the wide side of the continuous casting die.

2. Method according to Claim 1, **characterized in that** the determination of the velocity is performed using the principle of least squares, wherein the mean square deviation of the magnetic fields (b) induced by the assumed velocity for the primary magnetic field (bo) from the respectively measured values is used as the functional to be minimized.

3. Method according to Claim 1 or 2, **characterized in that** the freedom from divergence of the velocity field as a result of minimizing the functional of the mean square divergence of the velocity field is used as additional information.

4. Method according to one of Claims 1 to 3, **characterized in that** the Tikhonov regularization is used to avoid unphysically large amounts of velocity.

5. Method according to Claim 4, **characterized in that** the mean square velocity or the mean square curvature of the velocity field is used as the regularization functional for the Tikhonov regularization.

6. Method according to one of Claims 1 to 5, **characterized in that** the primary magnetic field (bo) is generated by means of a single coil (1).

**Revendications**

1. Procédé de détermination sans contact de la distribution de vitesse de l'écoulement de liquide (v) d'un métal liquide dans une coquille de coulée continue pendant la coulée de brame,

- la coquille de coulée continue comportant un grand côté et un petit côté,
- un champ magnétique primaire unique (bo), qui s'étend le long de la direction verticale, étant généré dans l'écoulement de liquide dans la coquille de coulée continue,
- les champs magnétiques (b) induits par l'interaction de l'écoulement de liquide avec le champ magnétique primaire (bo) étant mesurés en une pluralité de points de détection à l'extérieur de l'écoulement de liquide, les champs magnétiques induits étant mesurés uniquement sur le petit côté de la coquille de coulée continue, et
- les deux composantes de vitesse de l'écoulement de liquide (v), dirigées parallèlement au grand côté de la coquille de coulée continue, étant déterminées à partir des champs magnétiques induits (b) mesurés.

2. Procédé selon la revendication 1, **caractérisé en ce que** la détermination de la vitesse est effectuée selon le principe des moindres carrés, l'écart quadratique moyen des champs magnétiques (b), induits pour le champ magnétique primaire (bo) par la vitesse supposée, par rapport aux valeurs mesurées respectives étant utilisé comme fonctionnelle à minimiser.

3. Procédé selon la revendication 1 ou 2, **caractérisé en ce que** l'absence de divergence du champ de vitesse est utilisée comme information supplémentaire par minimisation de la fonctionnelle de la divergence quadratique moyenne du champ de vitesse.

4. Procédé selon l'une des revendications 1 à 3, **caractérisé en ce que** la régularisation de Tichonov est utilisée pour éviter des quantités de vitesse non physiques importantes.

5. Procédé selon la revendication 4, **caractérisé en ce que** la vitesse quadratique moyenne ou la courbure quadratique moyenne du champ de vitesse est utilisée comme fonctionnelle de régularisation pour la régularisation de Tichonov.

6. Procédé selon l'une des revendications 1 à 5, **caractérisé en ce que** le champ magnétique primaire (bo) est généré au moyen d'une seule bobine (1).

Figur 1

Figur 2

Figur 3

# EP 2 379 991 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0051763 A
- WO 0058695 A
- DE 4316344 A1
- EP 1192019 B1
- EP 1285277 A1
- EP 1285277 B1

**In der Beschreibung aufgeführte Nicht-Patentliteratur**

- **STEFANI, FRANK et al.** Contactless inductive flow tomography. *Physical Review,* 2004, vol. E70, 056306
- **STEFANI, FRANK et al.** Contactless inductive flow tomography. *Physical Review,* 2004, vol. E70, 056306-1
- **HÄMÄLÄINEN, M. et al.** Magnetoencephalography - Theory, instrumentation, and application studies ofthe working human brain. *Rev. Mod. Phys.,* 1993, vol. 65, 414-497
- **HANSEN, P. C.** Analysis of discrete ill-posed problems by means of the L-curve. *SIA-Review,* 1992, vol. 34 (4), 561-580